# EUROPEAN PATENT APPLICATION

(11) **EP 3 225 124 A2**
(43) Date of publication of application: **04.10.2017**
(21) Application number: 15830789.2
(22) Date of filing: 24.11.2015
(51) Int. Cl.: A42B 3/00, B62J 11/00

(54) **HELMET CASE TO BE CARRIED ON A TWO-WHEELED VEHICLE**

(30) Priority: 26.11.2014 ES 201431526 U
(71) Applicant: Kobe Dreams 21, S.L., 08205 Sabadell (ES)
(72) Inventor: MERCADER SANJUAN, Jordi, E-08201 Sabadell (ES)
(74) Representative: Sugrañes Patentes y Marcas
(86) International application number: PCT/ES2015/070847
(87) International publication number: WO 2016/083645

(57) **Abstract**

The helmet case comprises a covering body, which partially configures an interior space that is variable in volume, capable of adopting an operative position, in which an interior space suitable for housing a helmet is configured, and an inoperative position, in which an invalid interior space is configured. The covering body is flexible and comprises an upper face, connected by lateral segments of its contour to two opposite lateral faces that are spaced apart by the upper face, and a rear connecting face between the rear segments of the contours of the upper and lateral faces. The covering body is foldable and collapsible since it can turn at least around the joining segments between the upper face and the lateral faces and adopt an inoperative position in which the lateral faces and the upper face are collapsed and superimposed, the upper face being thus located between the two lateral faces.

## Description

### Technical field of the invention

The present invention relates to a helmet case, which makes it possible to safely keep the helmet of a motorcycle or bicycle rider in the rear portion of the two-wheeled vehicle, thus protecting it from the weather conditions and vandalism through a highly resistant structure and closing elements, which prevent any security breach thereof.

### Background of the invention

On the market, there is a wide variety of storage compartments that enable motorcycle users to keep inside certain objects such as a helmet, gloves, bags, file folders and wallets without having to carry them around when the vehicle is parked on the street, a garage or any other place.

Some of these storage compartments are hidden under the driver's seat, which functions as a hinged cover, capable of remaining affixed to the vehicle chassis through a lock, while others are mounted on the rear portion of the vehicle, preferably over the rear wheel mudguard.

In any event, these compartments are rigid and occupy at all moments a considerable volume, as they have to be able to keep inside, at least, a helmet, whose use is mandatory while driving. The manufacturing industries of this type of vehicles and the accessories thereof are working to find a solution aiming at keeping the helmet well protected against theft and vandalism, while the vehicle is parked, in addition to providing compartments which do not entail unbalancing the moving vehicle and which elements used for affixing thereof to the vehicle structure are as universal as possible so that just one single compartment may be mounted in as many vehicles as possible.

With the aim of minimizing the impact that the compartment volume involves when the vehicle is moving, compartments have been developed which, while still rigid, have a structure that makes it possible to considerably decrease their volume when the helmet is not kept inside, for example while driving the vehicle. An example of this type of compartments can be found in the patent document ES2537833-A1, formed by a base body which is fixed to the vehicle, and on which a movable portion is arranged, which comprises a set of slats displaying two positions; the first one forming, when the slats are extended, the compartment cover in the shape of a substantially spherical cap that protects the helmet, and the second offering, when the slats are gathered, i.e. whenever the helmet is not placed inside, negligible wind resistance.

It should be remembered that helmets are not only used by motorcycle riders, since cyclists, who are more and more conscious of their own safety, also demand compartments or devices enabling them to safely store their helmets when they park their bicycles and want to walk around without having to take the helmet with them, and which do not entail significant modifications in the rear portion of their bicycles or an obstacle with regard to weight and air resistance, while providing security against theft and vandalism, which currently is not ensured with the covers and bags used for storing helmets chained to the bicycle.

### Description of the invention

With the aim of finding a solution to the drawbacks posed, a helmet case to be carried on a two-wheeled vehicle is disclosed herein, which comprises a covering body that partially configures an interior space variable in volume as a function of the end position in which it is found, which may be an operative keeping position, in which the interior space configured by the covering body is suitable to house a helmet, or an inoperative position in which the interior space configured by the covering body is invalid for housing a helmet.

Essentially, the helmet case of the invention is characterized in that the covering body is a flexible body that comprises four faces, an upper face joined by respective lateral segments of the contour thereof to two opposite lateral faces and spaced apart by the upper face, and a rear face, which constitutes the junction between the rear segments of the contours of the upper and lateral faces. The covering body is foldable and collapsible since it is capable of turning its upper face and its two lateral faces at least around the joining segments between said faces, and adopting an inoperative position, in which the lateral faces and the upper face are collapsed and superimposed, the upper face thus being located between the two lateral faces.

In this way, the helmet case of the invention, as it is capable of adopting the inoperative position, makes it possible to drastically reduce the volume that was occupied by the helmet case when the driver of the two-wheeled vehicle is driving with the helmet on, eliminating noise and entailing practically no wind resistance at all. When the covering body is in the inoperative position, the lateral face that ends up on top is collapsed over the upper face, remaining essentially in a horizontal plane.

According to another characteristic of the invention, the upper face and the two lateral faces are made of a flexible material configured in the form of a sheet, such as a woven fabric or a non-woven fabric, and their contour is provided with a structural reinforcement element along the contour of the respective face in order to maintain the shape of the contour. The structural reinforcement element may be a continuous element or may have segments arranged along the respective contour.

In accordance with another characteristic of the invention, the structural reinforcement element of the contour of the upper face and the two lateral faces is an elastic thread-like or a strip-shaped element (for instance, a laminated wire) made of a metal, plastic or composite material. Preferably, said elastic element is formed by a strapping band or a steel rod.

Preferably, the structural reinforcement element of the contour of the upper face and the two lateral faces is arranged inside a hem or perimeter channel provided on the respective contour of the face, although alternatively, it may be directly attached to the contour by sewing, clamping, adhesive bonding or welding.

According to another characteristic of the invention, the material of the upper face, the lateral faces and the rear face is a flexible material with a single-layer or multiple-layer structure.

Thus, it is envisaged that the textile material of the covering body is formed by an outer layer, which may be a layer against cuts or not, fireproof or not, a waterproof layer, which may be breathable (like a Goretex® layer) or not, a protective layer against ultraviolet rays, UVA, a layer that can be heated and an inner layer having a soft feel or finish to avoid damaging the helmet (or that one of the preceding layers is a layer having those characteristics). All or some of these layers may be laminated to one another or not. Likewise, some of the functions indicated, for example shear resistance ability, fireproof capacity, protection against UVA rays, etc., may be integrated in one single layer.

According to another characteristic of the invention, the material of the faces of the covering body comprises a layer of a textile material that is weather resistant, to prevent the rain or moisture from penetrating inside the covering body. This material may be, among other options, a textile material of the membrane type (like for example a material identical or similar to that commercially known as Gore-Tex ®), a textile material containing ultra-high molecular weight polyethylene fibers (like for example a material identical or similar to that commercially known as Gore-Tex ®), a textile material incorporating aramid fibers, preferably made of poly-paraphenylene terephthalamide (commercially known as Kevlar ®), or a textile material with metaramid fibers, commercially known as Nomex®, which has fireproof properties.

In accordance with another characteristic of the invention, the material of the faces of the covering body comprises a protective layer against cuts. This protective layer against cuts is preferably formed by a textile material incorporating anti-cut fibers of a metallic or polymeric nature, for example, aramid-based fibers, preferably made of poly-paraphenylene terephthalamide (like those commercially known as Kevlar ®). In this way, the covering body offers resistance against the breakage thereof when faced with vandalism and ensures its inviolability.

According to a preferred embodiment of the invention, the upper face is cut according to an ovoid shape and the lateral faces are cut according to a shape equivalent to the ovoid shape of the upper face from which a portion has been sectioned according to a curved cut. It should be understood that any shape similar to that of an ovoid is envisaged in the invention, even if the contour thereof is formed by multiple straight segments emulating the curve of the ovoid contour, i.e. constituting a polygonal shape.

In accordance with another characteristic of the invention, the helmet case further comprises a rigid or semi-rigid support base, adapted to be fixed to the rear portion of a two-wheeled vehicle and for supporting a helmet, on which the covering body is arranged, coupled to the support base, by connecting at least the lateral faces and the rear face, the support base being the portion of the helmet case over which the lateral faces and the upper face are collapsed and superimposed in the inoperative position.

According to another characteristic of the invention, the connection of the lateral faces and the rear face of the covering body to the support base is carried out by means of a connecting skirt. This skirt may be directly inserted in a slot arranged in the support base or may be provided with a cable removably inserted in a slot of the support base, arranged therein for such purpose.

According to another characteristic of the invention, the helmet case further comprises means for immobilizing the front portion of the upper face to the front portion of the support base, the front portions being those farthest away from the rear face, the immobilizing means being configured to cooperate with blocking means actuated by a key lock that is arranged in the support base; such that the helmet case may thereby adopt a closed position in which the front portion of the upper face rests upon the front portion of the support base and cannot be separated therefrom, and an opening and releasing position, in which the front portion of the upper face is free to be separated from the front portion of the support base, thus configuring a front opening through which the helmet may be placed into or extracted from the interior space formed by the support base, the upper face, the two lateral faces and the rear face.

In accordance with another characteristic of the invention, the immobilization means previously described comprise a resistant cable, preferably made of steel, arranged across the front portion of the upper face of the covering body, with a rear end fixed to the rear or intermediate portion of the support base and with a front end capable of being introduced in a blocking slot, in which slot the blocking means are located and which is provided in the front portion of the support base, and said end being able to be retained by the blocking means due to the turning action of the key of the lock in a given direction, the length of the cable being sufficient to fasten a helmet or a portion thereof to the support base when the covering body is in the operative keeping position and the helmet housed into the interior space configured by the covering body and the support base. Preferably, the support base is provided with a plurality of through holes, such that any of them may suitably be crossed by the first end of the resistant cable, said end being fixed under the support base. Starting from the first fixed end, the helmet resting on the support base, may be surrounded by the resistant cable and the other end thereof be introduced in the blocking slot, wherein it will be retained when the key is turned into the lock, safely immobilizing the helmet relative to the support base.

According to another characteristic of the invention, the helmet case comprises an alarm security system, which is activated when the helmet case is in the closed position. The alarm security system comprises at least a movement sensor capable of detecting a movement in any of the faces of the covering body or the support base above a threshold movement level, an emitter of light and/or acoustic signal and, additionally, a communication module, which as a function of what the movement sensor detects, emits a warning signal to a device external to the helmet case (for example, the cell phone of the owner of the two-wheeled vehicle). In addition, the security system may further comprise a global positioning system (GPS). The communication module may transmit by radio frequency, for example be a communication module based on one or more of the following technologies: Sigfox, GPRS, Wifi, RFID and Bluetooth. According to another characteristic of the invention, the emitter of the light and/or acoustic signal and components of the communication module of the alarm security system are housed or built-in the support base. This may also be the case of the GPS global positioning system.

Thus, in the event of an attempt to tamper with the helmet case or an attempt to steal the contents thereof, the owner will receive a warning in his/her cell phone and at the same time the thief will be intimidated by the acoustic or light signal which will alert the people that are close by. In addition, if the entire helmet case is actually stolen, either separated or not from the vehicle, advantageously, the global positioning system will indicate its position so that it may be quickly recovered.

In accordance with another secondary embodiment of the invention, the structural reinforcement element along each contour of the upper face and the two lateral faces is a steel cable, in which each steel cable incorporates closing means that cooperate with one or more locks located in the front portion of the support base, the closing means of the steel cable on the contour of the lateral faces being constituted by U-shaped rings and those of the steel cable on the contour of the upper face by pivots capable of passing through the U-shaped rings and being introduced in respective non-through holes provided in the support base, and the pivots being capable of being immobilized by the action of corresponding locks provided in the support base.

Thus, when the two-wheeled vehicle is parked, the user unlocks the locks, extends the upper face upwards and extends the lateral faces sideways passing from the inoperative position to the operative position, takes off the helmet and places it into the interior space configured by the lateral faces, the upper face and the support base, and then pulls the front portion of the upper face immobilizing again the pivots into the locks, as they cross again the U-shaped rings of the edges of the lateral faces, leaving the helmet protected in the interior of the helmet case.

According to another characteristic of the invention, in line with the secondary embodiment, the lateral faces of the covering body may incorporate, on part of the contour thereof, strips with an adhesive surface.

### Brief description of the drawings

A preferred embodiment and a secondary embodiment of the helmet case, object of the invention, are illustrated in the attached documents, by way of non-limiting example. In said drawings:
Fig. 1 is a perspective view of a preferred embodiment of the helmet case, object of the invention, in an operative keeping position;
Fig. 2 is a perspective view of the helmet case of Fig. 1 in an open and releasing position;
Fig. 3 is a perspective view of the helmet case of Fig. 1 in an intermediate position for passing from the position of Fig. 2 to an inoperative position;
Fig. 4 is a perspective view of the helmet case of Fig. 1 in an inoperative position as a result of the turning and collapsing operation of Fig. 3, seen from the left;
Fig. 5 is a perspective view of the helmet case of Fig. 4, seen from the right;
Fig. 6 is a perspective view of a secondary embodiment of the helmet case, object of the invention, in an open and releasing position;
Figs. 7, 8 and 9 are respective perspective views of the helmet case of Fig. 6 in an operative keeping position;
Fig. 10 is a view of the helmet case of Fig. 6 in an inoperative position and covered by a cover; and
Figs. 11 and 12 are detailed views of the U-shaped rings and the pivots of the closing means respectively provided on the lateral faces and upper face of the covering body of the helmet case of Fig. 6; and
Fig. 13 is a detailed view of the closing means of the lateral faces and the upper face of the covering body and of one of the locks of the helmet case of Fig. 6.

### Detailed description of the drawings

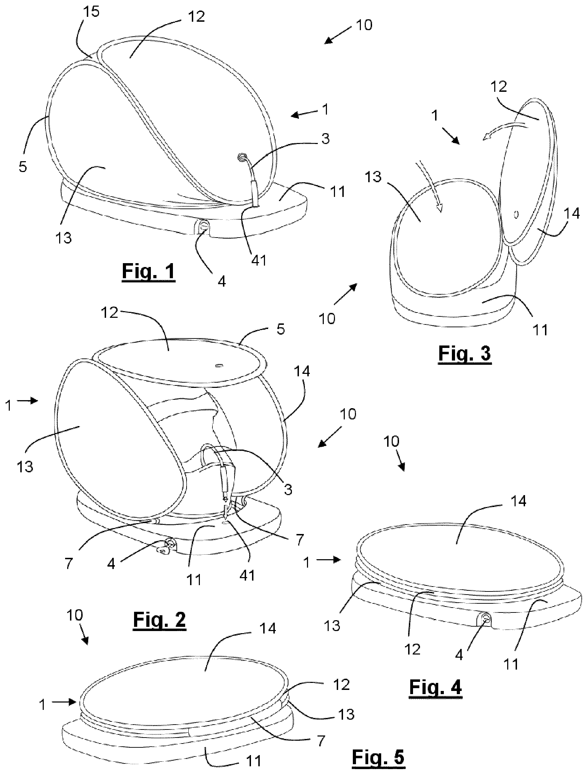

In Figs. 1 to 5 a helmet case 10 which is able to be carried on a two-wheeled vehicle is shown, which as its name indicates, serves to safely keep a helmet 30 when the user is not wearing it, for example, when the vehicle is parked.

It can be observed that the helmet case 10 is basically formed by a support base 11 on which a foldable and collapsible covering body 1 is arranged, formed by an upper face 12, two lateral faces 13 and 14 and a rear face 15. The upper face is attached by respective lateral segments of the contour thereof to segments of the upper contour of the two lateral faces 13 and 14 (see Fig. 2 to view the segments of the contours that are attached together), whereas the rear face 15 constitutes a junction face between the rear segments of the contours of the upper face 12 and lateral faces 13, 14. The connection of the lateral faces 13 and 14, and the rear face 15 of the covering body 1 to the support base 11 is carried out by means of a connecting skirt 7 (see Fig. 2 and Fig. 5).

Likewise, it may also be observed that the upper face 12 is cut according to an ovoid shape, and the lateral faces 13 and 14 are cut according to a shape equivalent to the ovoid shape of the upper face 12 from which a portion has been sectioned according to a curved cut in one of the possible sides of an ovoid.

The contours of the upper face 12 and the two lateral faces 13 and 14 are provided with a structural reinforcement element (not visible in Figs. 1 to 5) along the contour of the respective face in order to maintain the shape of the contour. The structural reinforcement element is an elastic thread-like or a strip-shaped element made of metal, plastic or compound material, such as a filament or a metal or plastic laminated wire, and preferably is arranged inside a hem or perimeter channel 5 provided on the respective face contour, although it may be directly attached to the contour by sewing, clamping, welding or adhesive bounding.

The covering body 1 configures, together with the support base 11, an interior space variable in volume as a function of the end position in which it is found, which may adopt multiple positions among which two end positions stand out: an operative keeping position, represented in Fig. 1, in which the helmet 30 is housed inside the helmet case 10, and an inoperative position, represented in Figs. 4 and 5, in which the interior space formed between the faces 12, 13 and 14 of the covering body 1 and the support base 11 is non-existent or insignificant, being invalid for housing a helmet 30 and indeed for housing any object that is not thin.

The position represented in Fig. 2 also corresponds to an operative position of the covering body 1, although not to the end operative keeping position, since the position of the upper 12 and lateral 13 and 14 faces of the covering body 1 make it possible to configure a space large enough to keep a helmet 30. The difference between the end operative position of Fig. 1 and the operative position of Fig. 2 is that in Fig. 1 the helmet case 10 is in a closed position in which the front portion of the upper face 12 rests upon the front portion of the support base 11 without the possibility of separating it from the latter (as will be explained below), whereas in Fig. 2, it is in an open and releasing position in which the front portion of the upper face 12 is free to be separated from the front portion of the support base 11, thus configuring a front opening through which the helmet 30 may be placed in or extracted from the interior space formed by the support base 11, the upper face 12, the two lateral faces 13 and 14, and the rear face 15.

As has been mentioned earlier, the covering body 1 stands out for being foldable and collapsible, being capable of turning its upper face 12 and its two lateral faces 13 and 14 at least around the joining segments between the upper face 12 and the two lateral faces 13, 14, being capable of adopting an inoperative position (Fig. 4) in which the lateral faces 13 and 14, and the upper face 12 are collapsed and superimposed, so the upper face 12 is arranged between the two lateral faces 13 and 14 or 14 and 13, depending on which lateral face 13 or 14 is being collapsed first. The collapsing operation that makes it possible to pass from the operative position of the covering body 1 of Fig. 2 to the inoperative position of Figs. 4 and 5 is the one shown in Fig. 3, consisting in that once the helmet 30 has been extracted, the user pushes the left lateral face 13 to the right, causing it to turn rightwards around the lower contour of the lateral face 13 or around the segment connecting the lateral face 13 to the support base 11 (the connecting skirt 7) until it collapses over said support base 11. With this movement, the upper face 12 simultaneously turns around the segment joining it with the right lateral face 14, and also around the segment joining it with the left lateral face 13, remaining in a vertical or biased position with a steep slope, as shown in Fig. 3. Next, it is pushed left of the right lateral face 14, causing the upper face 12 to collapse over the left lateral face 13, which was already practically collapsed over the support base 11, and then the right lateral face 14 remains located above the upper face 12, thus adopting the inoperative position of Fig. 4, in which the covering body 1 occupies a minimal amount of space when compared with that which it occupies in the operative position. It should be noted that the collapsing operation described might be initiated in the opposite direction, i.e. first pushing the right lateral face 14 to the left.

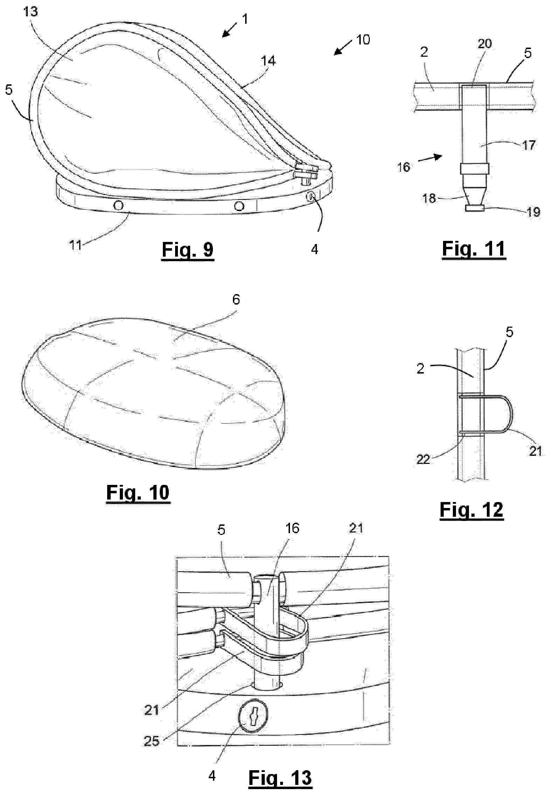

The helmet case 10 in the inoperative position may be covered with a cover 6, like the one shown in Fig. 10, provided with a zipper so it can be kept folded inside the helmet case 10 when the motorcycle is on the road.

The material of the upper face 12, of the lateral faces 13 and 14, and the rear face 15 is a flexible material with a structure that may be formed by one single layer or by multiple layers. Thus, it is envisaged that the textile material of the covering body 1 is formed by an outer layer, which may be a layer against cuts or not, fireproof or not, a waterproof layer, which may be breathable (like a Goretex® layer) or not, a protective layer against UVA ultraviolet rays, a layer that can be heated and an inner layer having a soft feel or finish to avoid damaging the helmet 30 (or that one of the preceding layers is a layer having these characteristics). All or some of these layers may be laminated to one another or not. Likewise, some of the functions indicated, for example shear resistance ability, fireproof capacity, protection against UVA rays, etc., may be integrated in one single layer.

Preferably, the material of the faces of the covering body 1 comprises a layer of a textile material that is weather resistant, for instance a material identical or similar to that commercially known as Gore-Tex ®, a textile material containing ultra-high molecular weight polyethylene fibers (like for example a material identical or similar to that commercially known as Dyneema ®), a textile material incorporating aramid fibers, preferably made of poly-paraphenylene terephthalamide (commercially known as Kevlar ®), or a textile material with metaramid fibers, commercially known as Nomex®, which in addition has fireproof properties.

Advantageously, the material of the faces of the covering body 1 also comprises a protective layer against cuts. This protective layer against cuts is preferably formed by a textile material incorporating anti-cut fibers of a metallic or polymeric nature, for example aramid-based fibers, preferably made of poly-paraphenylene terephthalamide (like those commercially known as Kevlar ®), Although in a less-preferred manner, it has also been envisaged to incorporate a layer of the material commercially known as Superfabric® or one such as that which is described in the document of patent US7018692. In this way, the covering body 1 offers high resistance against the breakage thereof when faced with vandalism and ensures its inviolability.

As has been previously mentioned, the helmet case 10 may adopt a closed position (Fig. 1) and an opening and releasing position (Fig. 2). To this end, in Figs. 1 to 4 it can be observed that the helmet case 10 further comprises immobilizing means 3 for immobilizing the front portion of the upper face 12 to the front portion of the support base 11, the front portions being those farthest away from the rear face 15. The immobilization means 3 comprise a resistant cable, preferably made of steel, arranged across the front portion of the upper face 12 of the covering body 1, with a rear end fixed to the rear or intermediate portion of the support base 11, and with a front end capable of being introduced in a blocking slot 41, in which there are blocking means 4 activated by a key lock 4 arranged on the support base 11. When the key is turned in the lock 4, the front end of the steel cable is retained in the blocking slot 41 due to the action of the blocking means, and the helmet case 10 thus adopts a closed position in which the front portion of the upper face 12 rests upon the front portion of the support base 11 without the possibility of separating it from the latter. In turn, if the user introduces the key in the lock 4 and turns it in the opposite direction as previously, the blocking means stop blocking and the user may extract the end of the cable by just pulling it, thus switching to the opening and releasing position in which the front portion of the upper face 12 is free to be separated from the front portion of the support base 11, configuring the front opening through which the helmet 30 is placed in or taken out. The length of the cable of the immobilizing means 3 is sufficient to fasten a helmet 30 or a portion thereof to the support base 11 when the covering body 1 is in the operative keeping position and the helmet 30 is housed in the interior space configured by the covering body 1 and the support base 11.

In addition to all the foregoing, the helmet case 10 comprises an alarm security system that is activated when the helmet case 10 is in the closed position. This alarm security system comprises at least a movement sensor capable of detecting a movement in any of the faces of the covering body 1 or the support base 11 above a threshold movement level and an emitter of a light and/or acoustic signal (see the front of the support base 11, Fig. 5, optionally a global positioning system and/or a module which as a function of the movement sensor emits a warning signal to a device external to the helmet case 10, for example to the cell phone of the user of the helmet case 10. The communication module may transmit by radio frequency, for example a communication module based on one or more of the following technologies: Sigfox, GPRS, Wifi, RFID and Bluetooth. The emitter of the light and/or acoustic signal, as well as the components of the global positioning system and the communication module are housed in or built into the support base 11.

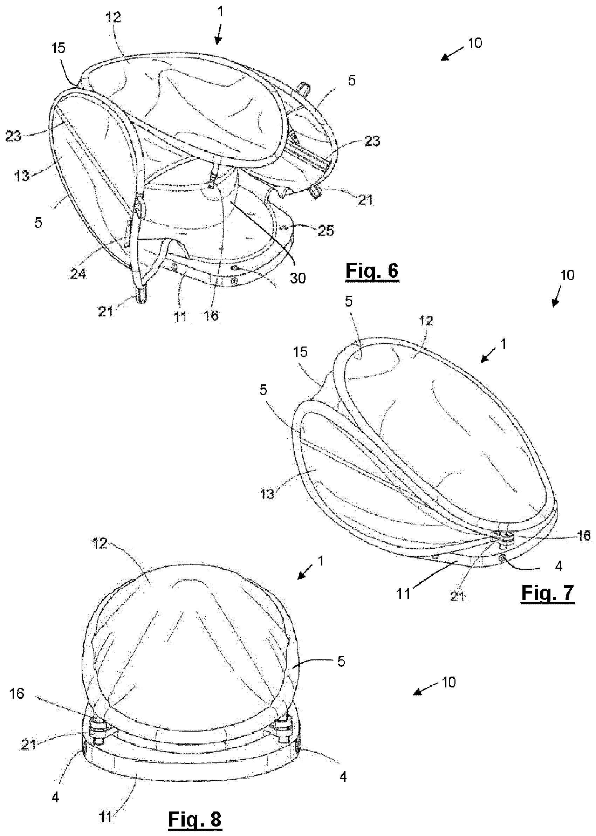

In Figs. 6 to 9 another variant of the helmet case 10 is represented. There are particular details in Fig. 6 that stand out, such as the fact that the lateral faces 13 and 14 of the covering body 1 incorporate strips 24 with an adhesive surface on part of the contour thereof to additionally reinforce the retention of the upper face between the lateral faces 13 and 14, and an inner rod 23, which extends from the rear edge to the front edge thereof as an additional reinforcement so the face keeps its shape.

In addition, the structural reinforcement element 2 along each contour of the upper face 12 and the two lateral faces 13 and 14 is a steel cable, wherein each steel cable incorporates closing means cooperating with one or more locks 41 located on the front portion of the support base 11, the closing means of the steel cable on the contour of the lateral faces 13, 14 being constituted by U-shaped rings 21 (see also Fig. 12) and those of the steel cable on the contour of the upper face 12 by pivots 16 (see Fig. 11) capable of passing through the U-shaped rings and being introduced in respective non-through holes 25 provided in the support base 11 (see Fig. 13), the pivots 16 remaining immobilized by the action of the corresponding locks 41 provided in the support base 11. The pivots 16 preferably are made of a tubular portion 17, a frustoconical portion 18 and a retraining portion 19, as can be observed in Fig. 11.

Additionally, the steel cables constituting the reinforcement elements 2 act as holding and threading means of the rings 21 and pivots 16, as shown in Figs. 11 and 12, in which can it may be seen that said rings 21 work in cooperation with the pivots 16, as well as with the locks 41 arranged in the support base 11, constituting along with the aforementioned cables a series of closing means of the covering body 1, when said pivots 16 pass through the rings 21, as can be seen in Fig. 13, given that corresponding holes 22 were provided in said rings, and the pivots 16 penetrate into the non-through holes 25 provided in the support base 11 cooperating with one or more locks 41.

## Claims

1. A helmet case (10) to be carried on a two-wheeled vehicle, which comprises a covering body (1) that partially configures an interior space that is variable in volume as a function of the end position in which it is found, which may be an operative keeping position, in which the interior space configured by the covering body (1) is suitable for housing a helmet (30), or an inoperative position, in which the interior space configured by the covering body (1) is invalid for housing a helmet (30), **characterized in that** the covering body (1) is a flexible body that comprises four faces, an upper face (12) joined by respective lateral segments of the contour thereof to two opposite lateral faces (13, 14), which are spaced apart by the upper face (12), and a rear face (15), which constitutes the junction between the rear segments of the contours of the upper (12) and lateral faces (13, 14), in which the covering body (1) is foldable and collapsible since its upper face (12) and its two lateral faces (13, 14) are capable of turning at least around the joining segments between them and adopting an inoperative position in which the lateral faces (13, 14) and the upper face (12) are collapsed and superimposed, the upper face (12) thus being arranged between the two lateral faces (13, 14).

2. The helmet case (10) according to claim 1, wherein the upper face (12) and the two lateral faces (13, 14) are made of a flexible material configured as a sheet, a woven fabric or a non-woven fabric, and the contour of which is provided with a structural reinforcement element (2) along the contour of the respective face in order to maintain the shape of the contour.

3. The helmet case (10) according to claim 2, wherein the structural reinforcement element (2) of the contour of the upper face (12) and the two lateral faces (13, 14) is an elastic thread-like or a strip-shaped element made of metal, plastic or compound material.

4. The helmet case (10) according to claim 2 or 3, wherein the structural reinforcement element (2) of the contour of the upper face (12) and the two lateral faces (13, 14) is arranged into a hem or perimeter channel (5) provided in the respective contour of the face or else is directly connected to the contour by sewing, clamping, welding or adhesive bonding.

5. The helmet case (10) according to any one of the preceding claims, wherein the material of the upper face (12), the lateral faces (13, 14) and the rear face (15) is a flexible material with a single-layer or multiple-layer structure.

6. The helmet case (10) according to claim 5, wherein the material of the faces of the covering body (1) comprises a layer made of a weather-resistant and/or waterproof textile material.

7. The helmet case (10) according to claim 6, wherein the weather resistant textile material is a textile material of the membrane type or a textile material containing ultra-high molecular weight polyethylene fibers or aramid fibers.

8. The helmet case (10) according to any one of the claims 5 to 7, wherein the material of the faces of the covering body (1) comprises a protective layer against cuts and/or a protective layer against ultraviolet rays and/or a layer that can be heated.

9. The helmet case (10) according to claim 8, wherein the protective layer against cuts is formed by a textile material incorporating anti-cut fibers of a metallic or polymeric nature.

10. The helmet case (10) according to claim 9, wherein the protective layer against cuts is formed by textile material incorporating aramid fibers, preferably made of poly-paraphenylene terephthalamide.

11. The helmet case (10) according to any one of the preceding claims, wherein the upper face (12) is cut according to an ovoid shape and the lateral faces (13, 14) are cut according to a shape equivalent to the ovoid shape of the upper face (12) from which a portion has been sectioned according to a curved cut.

12. The helmet case (10) according to any one of the preceding claims, wherein the case further comprises a rigid or semi-rigid support base (11) adapted to be fixed to the rear portion of a two-wheeled vehicle and receive the weight of a helmet (30), on which is arranged the covering body (1) coupled to the support base (11) by connecting at least the lateral faces (13, 14) and the rear face (15), the support base (11) being the portion of the helmet case (10) over which the lateral faces (13, 14) and the upper face (12) are collapsed and superimposed in the inoperative position.

13. The helmet case (10) according to claim 12, wherein the connection of the lateral faces (13, 14) and the rear face (15) of the covering body (1) to the support base (11) is carried out by means of a connecting skirt (7).

14. The helmet case (10) according to claim 12 or 13, wherein the helmet case (10) further comprises immobilizing means (3) for immobilizing the front portion of the upper face (12) to the front portion of the support base (11), the front portions being those farthest away from the rear face (15), being configured to cooperate with blocking means actuated by a key lock (4) arranged in the support base (11) so the helmet case (10) may thereby adopt a closed position in which the front portion of the upper face (12) rests upon the front portion of the support base (11) and cannot be separated therefrom, and an opening and releasing position in which the front portion of the upper face (12) is free to be separated from the front portion of the support base (11), thus configuring a front opening through which the helmet (30) may be placed in or extracted from the interior space formed by the support base (11), the upper face (12), the two lateral faces (13, 14) and the rear face (15).

15. The helmet case (10) according to claim 14, wherein the immobilizing means (3) comprise a resistant cable, preferably made of steel, arranged across the front portion of the upper face (12) of the covering body (1), with a rear end fixed to the rear or intermediate portion of the support base (11) and with a front end capable of being introduced in a blocking slot (41), in which the blocking means are located, and that is provided in the front portion of the support base (11), and said end being retained by the blocking means due to the turning action of the key in the lock (4) in a given direction, the length of the cable being sufficient to fasten a helmet (30) or a portion thereof to the support base (11) when the covering body (1) is in the operative keeping position and the helmet (30) is housed in the interior space configured by the covering body (1) and the support base (11).

16. The helmet case (10) according to claims 14 or 15, which comprises an alarm security system that is activated when the helmet case (10) is in the closed position, wherein the alarm security system comprises at least a movement sensor capable of detecting a movement in any of the faces of the covering body (1) or the support base (11) above a threshold movement level, and an emitter of a light and/or acoustic signal as a function of what the movement sensor detects.

17. The helmet case (10) according to claim 16, wherein the emitter of the light and/or acoustic signal is housed in or built into the support base (11).

18. The helmet case (10) according to claims 16 or 17, wherein the alarm security system further comprises a global positioning system and/or a radio frequency communication module which as a function of the movement sensor detection emits a warning signal to a device external to the helmet case (10).

19. The helmet case (10) according to claims 2 and 12, wherein the structural reinforcement element (2) along each contour of the upper face (12) and the two lateral faces (13, 14) is a steel cable, wherein each steel cable incorporates closing means cooperating with one or more locks (4) located on the front portion of the support base (11), the closing means of the steel cable on the contour of the lateral faces (13, 14) being constituted by U-shaped rings (21) and those of the steel cable on the contour of the upper face (12) by pivots (16) capable of passing through the U-shaped rings and being introduced in respective non-through holes (25) provided in the support base (11), and the pivots (16) remaining immobilized by the action of the corresponding locks (4) provided in the support base (11).

20. The helmet case (10) according to any one of the preceding claims, wherein the lateral faces (13, 14) incorporate, on a portion of their contour, strips with an adhesive surface (24).
